# FASCICULE DE BREVET EUROPEEN

(11) **EP 2 494 719 B1**
(45) Date de publication et mention de la délivrance du brevet: **13.03.2019**
(21) Numéro de dépôt: 10774140.7
(22) Date de dépôt: 27.10.2010
(51) Int. Cl.: H04B 13/00, H04B 7/26, A41D 13/02

(54) **ENSEMBLE D'EQUIPEMENTS METTANT EN OEUVRE UNE TRANSMISSION DE DONNEES VIA LE CORPS HUMAIN**
ANORDNUNG VON VORRICHTUNGEN ZUR IMPLEMENTIERUNG EINER DATENÜBERTRAGUNG ÜBER DEN MENSCHLICHEN KÖRPER
ASSEMBLY OF APPARATUSES FOR IMPLEMENTING DATA TRANSMISSION VIA THE HUMAN BODY

(30) Priorité: 27.10.2009 FR 0905173; 27.10.2009 FR 0905174
(43) Date de publication de la demande: 05.09.2012
(73) Titulaire: Safran Electronics & Defense, 92100 Boulogne-Billancourt (FR)
(72) Inventeur: NOLLET, Michel, F-92100 BOULOGNE-BILLANCOURT (FR)
(74) Mandataire: Lavialle, Bruno François Stéphane
(86) Numéro de dépôt international: PCT/EP2010/006553
(87) Numéro de publication internationale: WO 2011/050946

(56) Documents cités:
- EP-A1- 1 821 432
- US-A1- 2002 030 585
- US-A1- 2006 239 421
- US-A1- 2006 252 371
- US-B1- 6 223 018

## Description

La présente invention concerne un procédé de transmission de données entre deux équipements électroniques portés par au moins un utilisateur.

L'invention concerne également un ensemble d'au moins deux équipements pour la mise en oeuvre de ce procédé.

Les progrès de l'électronique et de l'informatique, la miniaturisation des composants et l'augmentation de l'autonomie des batteries ont permis d'équiper certains professionnels, tels que les soldats, de dispositifs ou équipements électroniques leur fournissant une assistance dans l'accomplissement de leurs missions. Parmi ces équipements électroniques, on trouve, de manière non limitative, un dispositif de visualisation qui est logé sur le casque et permet une vision rapprochée et/ou en condition de faible luminosité, un ensemble de communication comportant un émetteur/récepteur associé à un micro et à un écouteur, un ordinateur permettant l'enregistrement et/ou la consultation d'informations, une lunette de visée montée sur l'arme... Ces différents équipements sont reliés les uns aux autres de telle manière que, par exemple, des images provenant de la lunette de visée ou du dispositif de visualisation puissent être transmises à l'ordinateur pour être mémorisées dans celui-ci et à l'émetteur/récepteur pour être transmises au centre de commandement. De même, il convient que les signaux électriques émis par un clavier ou par une commande quelconque située sur un équipement puissent être reçus et exécutés par un autre équipement situé à quelque distance du premier. Les équipements sont fixés ou insérés dans des poches en différents endroits du vêtement du soldat, ainsi que sur son casque, sur son arme, etc.

Les équipements sont reliés les uns aux autres via des câbles pouvant atteindre une longueur totale de plusieurs mètres et un poids de plusieurs kilos. Ces câbles sont intégrés au maximum au vêtement, mais dépassent de celui-ci (par exemple celui qui monte vers le casque ou celui qui va vers l'arme) et risquent d'être accrochés lors des évolutions du soldat. En outre, les mouvements du soldat ou les chutes de celui-ci peuvent entraîner l'exercice d'effort de traction, de torsion, de cisaillement tant sur les câbles que sur les connecteurs qui les raccordent aux équipements. Les connecteurs risquent de plus d'être encrassés par la présence de boues ou de sable et doivent être étanches, connectés ou non, pour empêcher que l'humidité établisse des fuites électriques et détruise par électrolyse les contacts des connecteurs. Les mesures de protection des câbles et des connecteurs, comme l'intégration de ceux-ci dans le vêtement et la présence de capuchons étanches, augmentent le poids du vêtement et le coût de celui-ci. Les connections constituent en outre une zone fragile dont le manque de fiabilité relatif peut mettre en péril une mission.

Il a été envisagé de remplacer au moins une partie des liaisons filaires par des liaisons sans fil et particulièrement des liaisons radio telles que celles répondant au standard IEEE 802. De telles liaisons radio présentent cependant des inconvénients :
- elles peuvent être détectées, interceptées et/ou brouillées,
- elles supposent la présence d'antennes ayant une directivité, d'autant plus importante qu'elles sont proches du corps, et une sensibilité à la polarisation qui peuvent empêcher la transmission de données dans certaines positions du soldat.

Des liaisons sans fil infrarouge ont également été envisagées mais celles-ci n'apportent pas d'améliorations notables des inconvénients précités. US6223018 divulgue un exemple d'un système de l'art antérieur.

Un but de l'invention est de proposer un moyen permettant la transmission de signaux en limitant au maximum le recours à des liaisons filaires tout en améliorant au moins en partie les inconvénients précités.

Selon l'invention, on prévoit un ensemble d'au moins un premier équipement et d'un deuxième équipement qui sont solidaires d'un vêtement et qui comportent chacun une unité de traitement de signal électrique reliée à une première borne et à une deuxième borne, au moins la première borne débouchant sur une surface interne du vêtement. Les unités de traitement et les bornes sont agencées pour assurer une transmission de données entre deux équipements en établissant entre les premières bornes de ces deux équipements au moins une liaison sans fil.

Selon un premier mode de réalisation, considérant que la distance de transmission désirée est faible (quelques cm à 1 m), la solution proposée utilise un champ électrique (dit aussi champ proche ou champ non formé) comme moyen de transmission. A la différence des ondes électromagnétiques utilisées dans la solution radio, un champ électrique seul est créé par la surface de tout conducteur porté sous tension. Si cette tension est modulée, le champ l'est aussi et la modulation est transmise à un autre conducteur de surface non nulle, qui constituera alors la seconde armature d'un condensateur.

Ainsi, dans le premier mode de réalisation, la première borne et la deuxième borne de chaque équipement sont une première plaque électriquement conductrice et une deuxième plaque électriquement conductrice qui sont agencées pour établir une première liaison et une deuxième liaison avec l'autre équipement de manière à former un circuit de transmission de données entre les équipements, la première liaison mettant en oeuvre au moins un couplage capacitif externe et les unités de traitement des équipements étant agencées pour :
- depuis le premier équipement introduire dans le circuit de transmission un signal électrique correspondant à des données à transmettre de telle manière que le signal transite sous forme de champ dans la première liaison,
- recevoir le signal dans le deuxième équipement et traiter le signal pour récupérer les données.

La distance séparant les équipements étant faible, car limitée aux dimensions du corps de l'utilisateur, les surfaces conductrices peuvent avoir une forme quelconque dès lors que leurs dimensions sont faibles par rapport à la plus grande distance de transmission envisagée. La transmission des champs électriques est possible même si les surfaces s'étendent selon des plans perpendiculaires. Ceci est d'autant plus intéressant que la transmission du champ électrique est insensible à la corrosion, les surfaces conductrices pouvant par ailleurs être recouvertes d'un revêtement isolant. Par couplage capacitif externe, on entend que le couplage capacitif est établi à l'extérieur de l'équipement, à « l'air libre », et pas non plus à l'intérieur d'un composant électronique.

Le signal électrique peut être continu ou alternatif et être un signal de commande ou un signal de données. Le signal est par exemple modulé pour transmettre des données et le champ est donc lui-même modulé de manière correspondante. Une simple démodulation au niveau du deuxième équipement permet donc, après captation, amplification, et éventuellement remise en forme du signal électrique, de récupérer les données contenues dans celui-ci.

Selon le deuxième mode de réalisation, les bornes débouchent sur une face interne du vêtement et les unités de traitement des équipements sont agencées pour :
- à partir du premier équipement, introduire dans le corps d'un porteur du vêtement un signal électrique correspondant aux données de manière à créer dans le corps du porteur un champ de potentiels,
- recevoir le signal aux bornes du deuxième équipement et traiter le signal pour récupérer les données.

Ainsi, c'est le corps qui constitue le vecteur de transmission du signal en conduisant le champ de potentiels vers le deuxième équipement. Les bornes des équipements sont plaquées ou collées directement sur la peau de l'utilisateur permettant l'introduction du signal électrique dans le corps de l'utilisateur par conduction ou encore par couplage capacitif. En pratique, lorsque des électrodes conductrices sont plaquées ou collées sur la peau de l'utilisateur, les modes d'introduction à travers la peau par conduction et par couplage capacitif sont simultanés et se complètent. Le signal électrique peut être continu ou alternatif et être un signal d'alimentation de l'équipement, un signal de commande ou un signal de données. Le signal est par exemple modulé pour transmettre des données et le champ de potentiels est donc lui-même modulé de manière correspondante. Une simple démodulation au niveau du deuxième équipement permet donc, après captation, amplification, et éventuellement remise en forme, du signal électrique, de récupérer les données contenues dans celui-ci.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 représente en élévation un ensemble d'équipements conforme à un premier mode de réalisation de l'invention,
- la figure 2 est une vue schématique illustrant le principe de fonctionnement selon une version simplifiée de ce mode de réalisation,
- la figure 3 est une vue schématique en perspective avec écorché d'un des équipements,
- la figure 4 est une vue partielle en coupe d'un ensemble conforme au premier mode de réalisation en position sur le corps de l'utilisateur,
- la figure 5 est une vue partielle de dessus avec écorché d'un ensemble conforme à une variante du premier mode de réalisation de l'invention,
- la figure 6 est une vue en coupe transversale illustrant un moyen de connexion entre équipements dans cette variante,
- la figure 7 est une vue analogue à celle de la figure 1 représentant un ensemble d'équipements selon un deuxième mode de réalisation de l'invention.

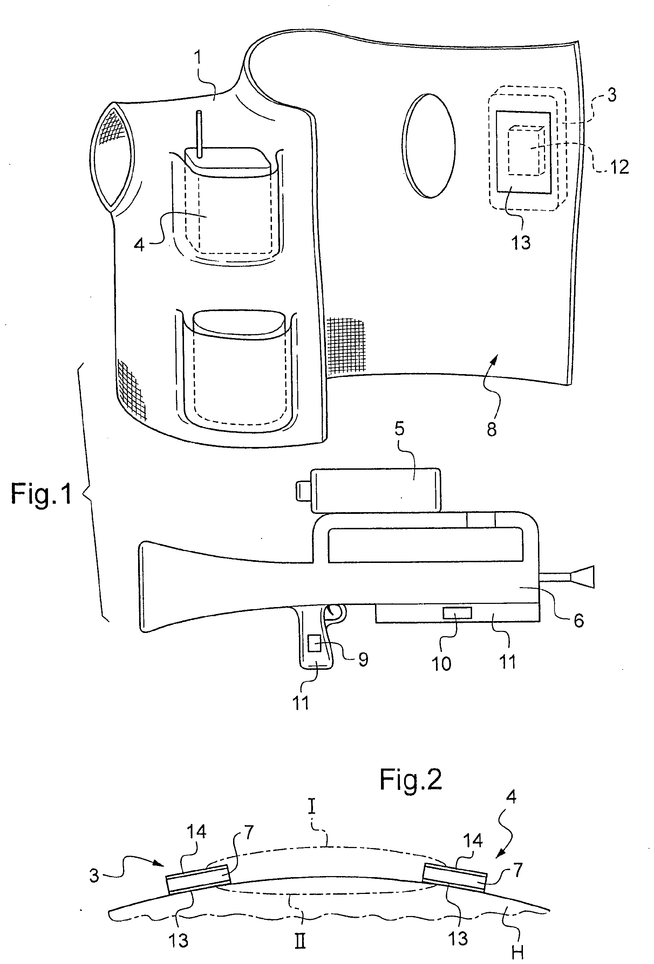

En référence aux figures 1 à 3, l'ensemble d'équipements conforme au premier mode de réalisation de l'invention est intégré à un vêtement, généralement désigné en 1, ayant la forme d'un gilet destiné à équiper un soldat et comportant une pluralité de poches dont certaines reçoivent chacune un équipement. Ces équipements sont ici un ordinateur 3, un émetteur/récepteur radio 4, une lunette 5 solidaire ou non d'une arme 6.

Chaque équipement 3, 4, comprend un boîtier 7 en matériau électriquement isolant renfermant une unité de traitement 12 agencée pour assurer l'émission et la réception de signaux électriques porteurs de données et capable d'extraire, d'un signal électrique reçu, des données contenues dans celui-ci. Le boîtier 7 comprend une face inférieure externe recouverte d'une plaque 13 réalisée en matériau électriquement conducteur et une face supérieure externe recouverte d'une couche de métallisation formant une plaque 14 électriquement conductrice. Les plaques 13, 14 peuvent se trouver dans le boîtier et/ou avoir des structures identiques. Les plaques doivent être éloignées des parties conductrices telles que les plaques de circuits intégrés de l'unité de traitement afin d'éviter une surcharge capacitive en mode d'émission et un rapport capacitif défavorable en mode réception. Si pour conserver une épaisseur réduite au boîtier, ceci n'est pas possible, les plaques peuvent être déportées (voir la description de la lunette 5) ou avoir une forme de cadre venant encadrer le boîtier.

La lunette 5 comprend un boîtier renfermant une unité de traitement reliée à des plaques conductrices 9, 10 déportées et solidaires des poignées de préhension 11 de l'arme.

Chacun des équipements 3 et 4 est reçu dans les poches du vêtement 1 de telle manière que la plaque électriquement conductrice 13 débouche sur une surface interne 8 du vêtement 1 (seule la plaque 13 de l'ordinateur 3 a été représentée).

Le fonctionnement de l'ensemble d'équipement est ici décrit en relation avec la transmission de données, par exemple entre l'émetteur/récepteur radio 4 et l'ordinateur 3.

Les équipements 3, 4 sont reliés en série par une première liaison I et une deuxième liaison II pour former entre ces deux équipements un circuit de transmission de données. La liaison I met en oeuvre un couplage capacitif. La liaison II met en oeuvre une conduction de courant dans le corps H de l'utilisateur.

Les unités de traitement sont agencées pour mettre en oeuvre un procédé de transmission de données qui comprend les étapes de :
- à partir d'un des équipements, par exemple l'émetteur/récepteur radio 4, introduire dans le corps de l'utilisateur un signal électrique correspondant aux données, par exemple des sons (signal analogique dit « audio » ou signal numérique), de telle manière que le signal transite dans la liaison II et donc dans le corps de l'utilisateur et dans la liaison I par couplage capacitif entre les plaques 14,
- recevoir le signal dans un autre des équipements, par exemple l'ordinateur 3, et traiter le signal pour en extraire les données.

Le signal émis est ici un signal alternatif modulé à une fréquence prédéterminée ou un signal numérique lui-même transmis tel quel ou après modulation. Il est possible de prévoir autant de fréquences porteuses ou de types de modulations ou de codes de modulation séquentielles ou non (TDMA, CDMA, DSL par exemple) que d'équipements pour éviter des interférences entre les signaux ou pour sélectionner l'équipement destinataire du signal en utilisant pour l'émission la fréquence ou le moyen de codage ou de reconnaissance (techniques de multiplexage) affectée à cet équipement.

Les plaques 13 sont fixées sur la face interne du vêtement en ce qui concerne les équipements portés par le vêtement. Lorsque les plaques 13 sont directement en contact avec la peau de l'utilisateur, un contact électrique s'établit entre chaque plaque 13 et le corps de l'utilisateur de sorte que le signal de données est transmis par conduction d'un courant entre les équipements via le corps de l'utilisateur. Lorsqu'une couche de vêtement, tel qu'un sous-vêtement ou une doublure du vêtement 1, est interposée entre les plaques 13 et la peau, cette couche de vêtement ne gêne pas la transmission du signal via le corps entre les équipements, un couplage capacitif est établi entre chaque équipement et le corps permettant le transfert des signaux sous formes de champ électrique entre chaque équipement et le corps, et les signaux transitant dans le corps par conduction sous forme de courant. On comprend ainsi que plusieurs couches de vêtement pourraient être interposées entre les plaques et le corps de l'utilisateur. Lorsque le vêtement interposé est sale ou humide (transpiration, pluie, passage de gué), la transmission n'est pas dégradée, elle est au contraire améliorée.

On peut prévoir que le vêtement et les plaques soient en contact direct avec la peau de l'utilisateur comme la plaque 9 de la lunette de visée 5 qui est en contact direct avec la peau de l'utilisateur lorsque celui-ci ne porte pas de gants tandis que la plaque 10 est laissée découverte pour une liaison par couplage capacitif ou en contact avec une surface électriquement conductrice recouvrant la peau ou le vêtement pour une transmission du signal électrique à la fois par conduction et couplage capacitif. La transmission par conduction est particulièrement utile pour la transmission de signaux continus ou basse fréquence. La transmission par couplage capacitif est efficace pour les fréquences plus hautes et suffit lorsque la transmission d'une composante continue n'est pas nécessaire.

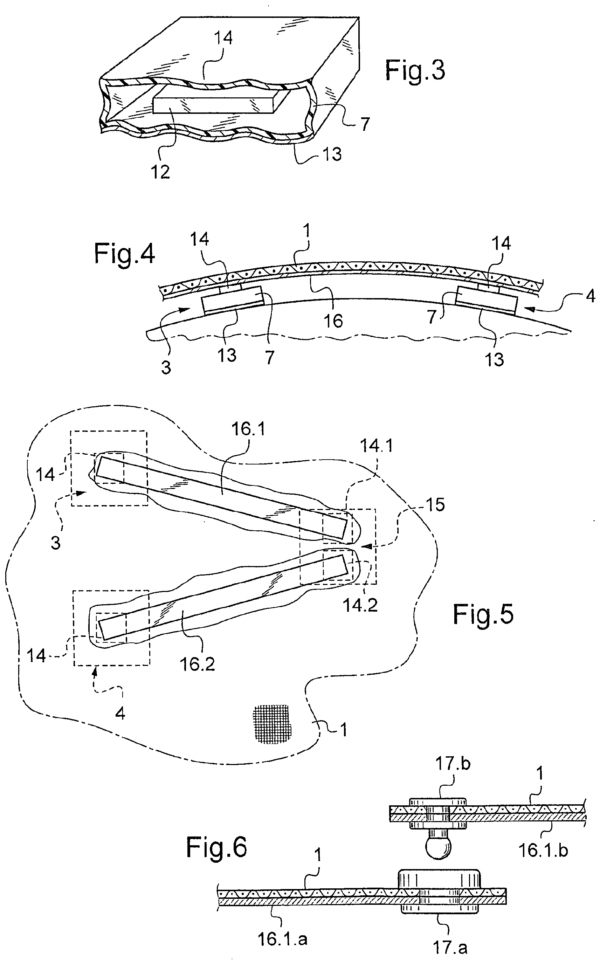

Dans la variante de la figure 4, le vêtement 1 comprend une couche électriquement conductrice 16 qui est en contact avec les plaques 14 des équipements 3, 4. La couche conductrice 16 comprend par exemple des particules conductrices noyées dans le tissu du vêtement, des fibres conductrices mélangées au tissu du vêtement ou un revêtement conducteur fixé au vêtement. Le tissu est rendu conducteur lors du tissage (par l'insertion des fibres conductrices) par imprégnation ou bien encore par dépôt (revêtement ou particules). La liaison I assure alors une transmission du signal par conduction dans la couche conductrice, ce qui permet de limiter l'atténuation du signal, et par couplage capacitif au niveau des interfaces couches conductrices / plaques 14.

Dans la variante de la figure 5, le vêtement 1 comprend une couche conductrice formée de deux bandes 16.1, 16.2 indépendantes pour former la liaison I. Les bandes 16.1, 16.2 relient respectivement :
- la plaque 14.1 d'un équipement 15 à la plaque 14 de l'ordinateur 3,
- la plaque 14.2 de l'équipement 15 à la plaque 14 de l'émetteur/récepteur radio 4.

La liaison II entre les équipements 3, 15 et les équipements 4, 15 est du même type que celle précédemment décrite. Une communication simultanée des équipements 3 et 4 avec l'équipement 15 est ainsi possible.

A la figure 6 a été représentée la bande 16.1 séparée en deux tronçons 16.1.a et 16.1.b qui sont raccordables via un bouton pression électriquement conducteur dont une partie 17.a est solidaire du tronçon 16.1.a et une partie 17.b est solidaire du tronçon 16.1.b. Le bouton-pression peut être utilisé comme un interrupteur.

D'autres modes de raccordement sont envisageables et par exemple des éléments autoagrippants de marque VELCRO, des fermetures à glissière...

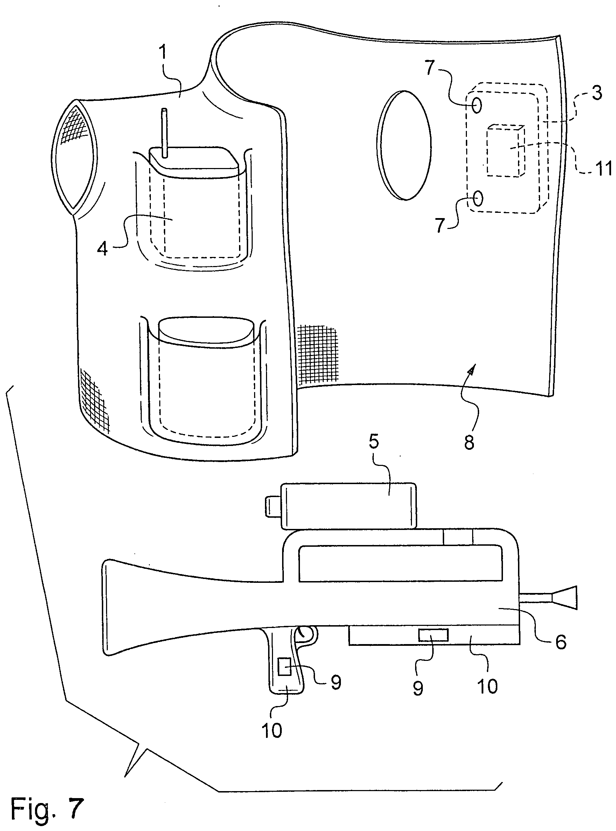

En référence à la figure 7, l'ensemble d'équipements selon le deuxième mode de réalisation de l'invention est, comme dans le premier mode, intégré à un vêtement généralement désigné en 1, comportant une pluralité de poches dont certaines reçoivent chacune un équipement. Ces équipements sont ici un ordinateur 3, un émetteur/récepteur radio 4, une lunette 5 solidaire ou non d'une arme 6.

Chacun des équipements 3 et 4 reçus dans les poches du vêtement 1 comprend deux bornes qui débouchent sur une surface interne 8 du vêtement 1 (seules les bornes 7 de l'ordinateur 3 ont été représentées). La lunette de visée 5 est équipée de bornes 9 solidaires des poignées 10 de préhension de l'arme 6. Chaque équipement 3, 4, 5 comprend une unité de traitement (seule l'unité de traitement 11 de l'ordinateur 3 a été représentée) agencée pour assurer l'émission et la réception de signaux électriques porteurs de données et capable d'extraire un signal électrique reçu des données contenues dans celui-ci.

Les unités de traitement sont agencées pour mettre en oeuvre un procédé de transmission de données qui comprend les étapes de :
- à partir d'un des équipements, par exemple l'équipement 5, introduire dans le corps de l'utilisateur un signal électrique correspondant aux données, par exemple une image (signal analogique dit « video » ou signal numérique), de manière à créer dans le corps de l'utilisateur un champ de potentiels,
- recevoir le champ de potentiels aux bornes d'un autre des équipements, par exemple l'ordinateur 3, récupérer le signal puis en extraire les données.

Le signal émis est ici un signal alternatif modulé à une fréquence prédéterminée ou un signal numérique lui-même transmis tel quel ou après modulation. Il est possible de prévoir autant de fréquences porteuses ou de types de modulations ou de codes de modulation séquentielles ou non (TDMA, CDMA, DSL par exemple) que d'équipements pour éviter des interférences entre les signaux ou pour sélectionner l'équipement destinataire du signal en utilisant pour l'émission la fréquence ou le moyen de codage ou de reconnaissance (techniques de multiplexage) affectée à cet équipement.

Comme les bornes sont fixées sur la face interne du vêtement en ce qui concerne les équipements portés par le vêtement et qu'une couche de vêtement- tel qu'un sous-vêtement, est généralement interposée entre les bornes et la peau, la transmission du signal entre le corps et les bornes de l'équipement est aisément réalisée par couplage capacitif. On comprend que plusieurs couches de vêtement pourraient être interposées entre les bornes et le corps de l'utilisateur. Lorsque le(s) vêtement(s) interposé(s) est sale ou humide (transpiration, pluie, passage de gué), la transmission n'est pas dégradée, elle est au contraire améliorée car un couplage par conduction s'ajoute au couplage capacitif qui n'a lui-même pas été atténué.

On peut prévoir que le vêtement et les bornes soient en contact direct avec la peau de l'utilisateur. D'ailleurs, les bornes de la lunette de visée 6 sont en contact direct avec la peau de l'utilisateur lorsque celui-ci ne porte pas de gants. Dans ce cas, la transmission du signal électrique est donc assurée à la fois par conduction et couplage capacitif. Si l'utilisateur porte des gants isolants, le couplage sera seulement capacitif. Pour améliorer la conduction de la peau, il est possible de recouvrir celle-ci d'un gel conducteur ou d'une peinture conductrice. Dans le cas de gants, on peut rendre leur tissu conducteur par différents procédés, si l'on souhaite un couplage par conduction. En général, le couplage par conduction est utile pour la transmission de signaux continus ou basse fréquence. Le couplage capacitif est efficace pour les fréquences plus hautes et il suffit lorsque la transmission d'une composante continue n'est pas nécessaire. On peut également améliorer la composante conduction en disposant les électrodes dans des zones naturellement humides du corps humain, comme les aisselles ou les muqueuses. On comprend que le champ de potentiels est conduit par la peau ou par la chair s'étendant sous la peau.

En variante, lorsque deux utilisateurs sont équipés du vêtement décrit ci-dessus, il est possible de transmettre des signaux d'un équipement d'un des utilisateurs à un équipement de l'autre des utilisateurs lorsque ceux-ci se touchent soit par deux parties de leurs corps et par exemple en se tenant les mains, ou lorsqu'ils se tiennent par une seule main en utilisant également le couplage capacitif entre les pieds et le sol qui est généralement au moins un peu conducteur.

Bien entendu, l'invention n'est pas limitée aux modes de réalisations décrits mais englobe toute variante entrant dans le champ de l'invention telle que définie par les revendications.

En particulier, bien que l'invention ait été décrite dans une application militaire, des applications civiles sont tout à fait envisageables pour faire communiquer des équipements électroniques portés par les civils tels que des téléphones, des appareils photos ou des baladeurs.

Les signaux électriques peuvent être de type alternatif modulé ou non, ou alternatif avec composante continue, ou continus (pour le deuxième mode de réalisation) .

Si la qualité du signal reçu est trop faible compte tenu d'une part du fait que son niveau doit être limité à l'émission pour ne pas présenter une gêne (ni bien sûr un danger) physiologique, et compte tenue d'autre part du fait qu'il subit dans le corps une atténuation et une déformation, il est possible de recourir à différents types de modulations analogiques et notamment des modulations de fréquence, d'amplitude à bande latérale unique, de phase, en quadrature, ou autre, mais également des modulations numériques dont la liste n'est pas non plus limitative. Toutes les techniques connues d'extraction du signal peuvent être favorablement utilisées.

Dans le premier mode de réalisation, si nécessaire, pour diminuer l'atténuation du signal, il est possible d'augmenter la fréquence de transmission, utiliser des plaques de plus grandes surfaces ou diminuer la capacité existant entre les deux plaques (dédiées aux liaisons II et I respectivement).

Le traitement du signal pour en extraire les données peut être un traitement numérique ou analogique, éventuellement associé à des corrections en cas de non linéarité et/ou à des techniques de récupération des données perdues en cas de BER (Bit Error Rate) élevé.

Les signaux peuvent également être multiplexés.

Les plaques peuvent être aménagées sur les flancs des boîtiers.

Les équipements peuvent comprendre plusieurs plaques dédiées chacune à la formation d'une liaison II avec un autre équipement.

Les deux liaisons établies entre les équipements peuvent mettre en oeuvre un couplage capacitif, sans conduction par le corps humain, notamment lorsque les équipements sont éloignés du corps humain et plus généralement d'un élément électriquement conducteur. Il a de soi que les équipements doivent cependant être suffisamment proches l'un de l'autre pour permettre l'établissement du couplage capacitif.

Chaque liaison peut mettre en oeuvre un ou plusieurs couplages capacitifs et/ou une ou plusieurs conductions.

## Revendications

1. Ensemble d'un vêtement, d'un premier équipement (3) et d'un deuxième équipement (4) qui sont solidaires du vêtement (1) et qui comportent chacun une unité de traitement de signaux électriques reliée à une première plaque électriquement conductrice (14) et une deuxième plaque électriquement conductrice (13) agencées pour établir une première liaison (I) et une deuxième liaison (II) avec l'autre équipement de manière à former un circuit de transmission de données, la deuxième liaison étant distincte de la première liaison,
la deuxième plaque de chaque équipement étant agencée pour être directement en contact avec la peau d'un utilisateur, les équipements étant solidaires d'un vêtement, les premières plaques des équipements débouchant sur une surface interne du vêtement,
la première liaison mettant en oeuvre au moins un couplage capacitif externe et la deuxième liaison mettant en oeuvre un couplage par conduction avec la peau de l'utilisateur,
les unités de traitement des équipements (3, 4) étant agencées pour :
- depuis l'un des premier équipement et deuxième équipement, introduire dans le circuit de transmission un signal électrique correspondant à des données à transmettre de telle manière que le signal transite sous forme de champ dans la première liaison,
- recevoir le signal dans l'autre des premier équipement et deuxième équipement et traiter le signal pour récupérer les données.

2. Ensemble selon la revendication 1, dans lequel les équipements (3, 4) sont agencés pour que la première liaison (I) mette en oeuvre plusieurs couplages capacitifs en série.

3. Ensemble selon la revendication 1, dans lequel les équipements (3, 4) sont agencés pour que la deuxième liaison (II) mette en oeuvre une conduction, le signal électrique correspondant aux données transitant sous forme de courant dans la deuxième liaison.

4. Ensemble selon la revendication 1, dans lequel les équipements (3, 4) sont agencés pour établir un contact électrique entre chaque équipement et le corps de l'utilisateur.

5. Ensemble selon la revendication 1, dans lequel les équipements (3, 4) sont agencés pour établir un couplage capacitif entre chaque équipement et le corps de l'utilisateur.

6. Ensemble selon la revendication 1, dans lequel la conduction se fait directement dans le corps de l'utilisateur.

7. Ensemble selon la revendication 1, dans lequel les premières plaques (14) des équipements débouchent en regard d'une couche interne (16) du vêtement (1), la couche interne étant électriquement conductrice.

8. Ensemble selon la revendication 7, dans lequel la couche interne conductrice (16) comprend au moins l'un des éléments suivants :
- un produit électriquement conducteur imprégnant une partie du vêtement,
- un produit électriquement conducteur pulvérisé sur une partie du vêtement,
- des fibres électriquement conductrices s'étendant dans un tissu du vêtement,
- un film électriquement conducteur fixé en regard d'une partie du vêtement.

9. Ensemble selon la revendication 1, dans lequel le vêtement (1) comprend une couche s'étendant en regard des deuxièmes plaques (13) des équipements (3, 4).

10. Ensemble selon la revendication 1, comprenant un équipement (5) solidaire d'un objet (6) comportant une zone de préhension pour une main de l'utilisateur et la deuxième plaque (9) de l'équipement est fixée sur la zone de préhension.

11. Ensemble selon la revendication 1, dans lequel au moins un des équipements (5) est solidaire d'un objet (6) comportant une zone de préhension (10) pour chaque main et les bornes (9) de l'équipement sont fixées respectivement sur les zones de préhension.

## Patentansprüche

1. Anordnung aus einem Kleidungsstück, einem ersten Gerät (3) und einem zweiten Gerät (4), die fest mit dem Kleidungsstück (1) verbunden sind und jeweils eine Verarbeitungseinheit zur Verarbeitung elektrischer Signale umfassen, die mit einer ersten elektrisch leitenden Platte (14) und einer zweiten elektrisch leitenden Platte (13) verbunden ist, die so ausgebildet sind, dass sie eine erste Verbindung (I) und eine zweite Verbindung (II) mit dem anderen Gerät herstellen, sodass ein Datenübertragungskreis gebildet wird, wobei die zweite Verbindung verschieden von der ersten Verbindung ist,
wobei die zweite Platte jedes Geräts so ausgebildet ist, dass sie direkt in Kontakt mit der Haut eines Nutzers ist, wobei die Geräte fest mit einem Kleidungsstück verbunden sind, wobei die ersten Platten der Geräte auf einer Innenseite des Kleidungsstückes münden,
wobei die erste Verbindung mindestens eine externe kapazitive Kopplung einsetzt und die zweite Verbindung eine Leitungskopplung mit der Haut des Nutzers einsetzt,
wobei die Verarbeitungseinheiten der Geräte (3, 4) so ausgebildet sind, dass:
- von einem der Geräte, die durch das erste Gerät und das zweite Gerät gegeben sind, ein elektrisches Signal, das den zu übertragenden Daten entspricht, in den Übertragungskreis eingeführt wird, derart, dass das Signal in Form eines Feldes durch die erste Verbindung hindurchläuft,
- das Signal in dem anderen der Geräte, die durch das erste Gerät und das zweite Gerät gegeben sind, empfangen wird und das Signal zur Wiedergewinnung der Daten verarbeitet wird.

2. Anordnung nach Anspruch 1, bei der die Geräte (3, 4) so ausgebildet sind, dass die erste Verbindung (I) mehrere kapazitive Kopplungen in Reihe einsetzt.

3. Anordnung nach Anspruch 1, bei der die Geräte (3, 4) so ausgebildet sind, dass die zweite Verbindung (II) eine Leitung einsetzt, wobei das den Daten entsprechende elektrische Signal in Form eines Stroms durch die zweite Verbindung hindurchläuft.

4. Anordnung nach Anspruch 1, bei der die Geräte (3, 4) so ausgebildet sind, dass sie einen elektrischen Kontakt zwischen jedem Gerät und dem Körper des Nutzers herstellen.

5. Anordnung nach Anspruch 1, bei der die Geräte (3, 4) so ausgebildet sind, dass sie eine kapazitive Kopplung zwischen jedem Gerät und dem Körper des Nutzers herstellen.

6. Anordnung nach Anspruch 1, bei der die Leitung direkt durch den Körper des Nutzers erfolgt.

7. Anordnung nach Anspruch 1, bei der die ersten Platten (14) der Geräte gegenüber einer Innenschicht (16) des Kleidungsstückes (1) münden, wobei die Innenschicht elektrisch leitend ist.

8. Anordnung nach Anspruch 7, bei der die leitende Innenschicht (16) mindestens eines der folgenden Elemente umfasst:
- ein elektrisch leitendes Produkt, das einen Teil des Kleidungsstückes imprägniert,
- ein elektrisch leitendes Produkt, das auf einen Teil des Kleidungsstückes aufgesprüht ist,
- elektrisch leitende Fasern, die in einem Gewebe des Kleidungsstückes verlaufen,
- eine elektrische leitende Folie, die gegenüber einem Teil des Kleidungsstückes befestigt ist.

9. Anordnung nach Anspruch 1, bei der das Kleidungsstück (1) eine Schicht umfasst, die sich gegenüber den zweiten Platten (13) der Geräte (3, 4) erstreckt.

10. Anordnung nach Anspruch 1, umfassend ein Gerät (5), das fest mit einem Objekt (6) verbunden ist, das eine Greifzone für eine Hand des Nutzers umfasst, und die zweite Platte (9) des Geräts an der Greifzone befestigt ist.

11. Anordnung nach Anspruch 1, bei der mindestens eines der Geräte (5) fest mit einem Objekt (6) verbunden ist, das eine Greifzone (10) für jede Hand umfasst, und die Anschlussklemmen (9) des Geräts an den jeweiligen Greifzonen befestigt sind.

## Claims

1. Assembly comprising a garment, and a first item of equipment (3) and a second item of equipment (4) which are secured to the garment (1) and which each comprise a unit for processing electrical signals which is connected to a first electrically conductive plate (14) and to a second electrically conductive plate (13), which latter are adapted to make a first link (I) and a second link (II) to whichever is the other item of equipment in such a way as to form a data transmission circuit, the second link being separate from the first link,
the second plate of each item of equipment being adapted to be in direct contact with the skin of a user, the items of equipment being secured to a garment, and the first plates of the items of equipment opening onto an inner surface of the garment,
the first link employing at least one external capacitive path of coupling and the second link employing a path of coupling by conduction to the skin of the user,
the processing units of the items of equipment (3, 4) being adapted:
- to introduce into the transmission circuit, from one of the first and second items of equipment, an electrical signal corresponding to data to be transmitted, in such a way that the signal makes its way onto the first link in field form,
- to receive the signal in the other of the first and seconds items of equipment and to process the signal to recover the data.

2. Assembly according to claim 1, wherein the items of equipment (3, 4) are so adapted that the first link (I) employs a plurality of capacitive paths of coupling in series.

3. Assembly according to claim 1, wherein the items of equipment (3, 4) are so adapted that the second link (II) employs conduction, the electrical signal corresponding to the data making its way onto the second link in the form of a current.

4. Assembly according to claim 1, wherein the items of equipment (3, 4) are adapted to make an electrical contact between each item of equipment and the body of the user.

5. Assembly according to claim 1, wherein the items of equipment (3, 4) are adapted to make a capacitive coupling between each item of equipment and the body of the user.

6. Assembly according to claim 1, wherein the conduction takes place directly into the body of the user.

7. Assembly according to claim 1, wherein the first plates (14) of the items of equipment open opposite an internal layer (16) of the garment (1), the internal layer being electrically conductive.

8. Assembly according to claim 7, wherein the conductive internal layer (16) comprises at least one of the following elements:
- an electrically conductive product with which part of the garment is impregnated,
- an electrically conductive product which is sprayed onto part of the garment, electrically conductive fibres extending within a woven fabric of the garment,
- an electrically conductive film fixed in place opposite part of the garment.

9. Assembly according to claim 1, wherein the garment (1) comprises a layer facing the second plates (13) of the items of equipment (3, 4).

10. Assembly according to claim 1, comprising an item of equipment (5) which is secured to an object (6) which comprises a gripping zone for a hand of the user, and the second plate (9) of the item of equipment is fixed to the gripping zone.

11. Assembly according to claim 1, wherein at least one of the items of equipment (5) is secured to an object (6) which comprises a gripping zone (10) for each hand, and the terminals (9) of the item of equipment are fixed to respective ones of the gripping zones.
